(19) **Europäisches Patentamt**
**European Patent Office**
**Office européen des brevets**

(11) **EP 1 895 650 B1**

(12) **EUROPEAN PATENT SPECIFICATION**

(45) Date of publication and mention
of the grant of the patent:
**11.11.2009 Bulletin 2009/46**

(51) Int Cl.:
*H02N 2/00* (2006.01)   *G04C 3/12* (2006.01)
*H01L 41/09* (2006.01)

(21) Application number: **06767152.9**

(22) Date of filing: **22.06.2006**

(86) International application number:
**PCT/JP2006/312494**

(87) International publication number:
**WO 2006/137478 (28.12.2006 Gazette 2006/52)**

(54) **PIEZOELECTRIC ACTUATOR AND ELECTRONIC DEVICE HAVING THE SAME**

PIEZOELEKTRISCHER AKTUATOR UND ELEKTRONISCHE VORRICHTUNG DAMIT

ACTIONNEUR PIÉZOÉLECTRIQUE ET DISPOSITIF ÉLECTRONIQUE UTILISANT LEDIT ACTIONNEUR

(84) Designated Contracting States:
**DE FR GB IT**

(30) Priority: **24.06.2005   JP 2005184454**
**25.04.2006   JP 2006119951**

(43) Date of publication of application:
**05.03.2008 Bulletin 2008/10**

(73) Proprietor: **Seiko Epson Corporation**
**Tokyo 163-0811 (JP)**

(72) Inventors:
• **SAWADA, Akihiro**
**Suwa-shi, Nagano 392-8502 (JP)**

• **KITAHARA, Joji**
**Suwa-shi, Nagano 392-8502 (JP)**

(74) Representative: **HOFFMANN EITLE**
**Patent- und Rechtsanwälte**
**Arabellastrasse 4**
**81925 München (DE)**

(56) References cited:
**JP-A- 07 049 388       JP-A- 2004 166 340**
**JP-A- 2004 239 408       JP-A- 2004 301 627**
**US-A1- 2004 227 433       US-A1- 2005 082 950**

**Description**

Technical Field

The present invention relates to a piezoelectric actuator, and an electronic equipment having possessed the same.

Background Art

Hitherto, in a calendar mechanism of a timepiece, a zoom mechanism and an autofocus mechanism of a camera, or a drive mechanism of a toy, and the like, there is used the piezoelectric actuator driving a driven body by a vibration of a vibration body having a piezoelectric element.
In the electronic equipment, such as the timepiece, the camera and the toy, in which the piezoelectric actuator like this has been incorporated, by an external impact of a fall or the like, positions of the vibration body of the piezoelectric actuator and the driven body such as a rotor driven by the piezoelectric actuator deviate and so an operation is influenced and, in a case where the impact is large, there is also a fear that a breakage occurs. Especially, from the fact that a portion support-fixing the vibration body is finely made such that generally the vibration of the vibration body is not hindered and thus its strength is weak, there is considered such a problem that this support part is snapped or a wiring having been provided in this support part is cut by a deformation of the vibration body due to the impact.
Here, when considering an impact-resistant structure of the piezoelectric actuator, in such a method as to merely, directly hold the vibration body, there is a problem that the vibration is impeded by that holding, so that a drive efficiency decreases.
Therefore, as an impact-resistant structure not directly holding the vibration body, there has been one in which the rotor and the vibration body are prevented from separating by providing a spring member pressing the rotor toward the vibration body, and providing a pin in a position adjoining this spring member to thereby regulate a movement of the spring member (Patent Document 1).
This pin of the Patent Document 1 is provided such that, in a case where, at an impact time, the rotor has moved by a predetermined distance in a direction separating from the vibration body, it butts against the spring member and thus there can be maintained a state in which the piezoelectric actuator has butted against the rotor and, in a case where, at the impact time, the rotor has separated from the vibration body, it is disposed in a position in which the rotor does not collide against any other member, and a position in which mesh between the rotor and a tooth of a next transmission wheel is not disengaged.
Patent Document 1: JP-A-2004-301627 Gazette (specification, paragraph [0013], Fig. 2)
By way of further example US 2005/0082950 A1 describes a piezoelectric actuator module and US 2004/0227433 A1 describes an ultrasonic motor.

Disclosure of the Invention

Problems that the Invention is to Solve

However, in a case where the pin like the Patent Document 1 is used, since it is difficult to determine a position suitable for disposing that pin, there is a problem that a design is difficult.
Further, in the Patent Document 1, although the movement of the rotor at the impact time is regulated and thus a breakage of the rotor can be prevented, since the movement of the vibration body is not regulated directly, there remains a possibility that, due to the impact, the vibration body is detached from the rotor or broken.
In view of the problems like these, an object of the present invention is to provide the piezoelectric actuator whose design does not become difficult, and in which the impact resistance can be greatly improved without incurring a decrease in the drive efficiency, and the electronic equipment having possessed the same.

Means for Solving the Problems

A piezoelectric actuator of the present invention is defined in claim 1
According to this invention, when the piezoelectric actuator has been incorporated' to the electronic equipment and the like, since the interstices of the predetermined dimensions intervene between the attached part and the free end part of the vibration body in the electronic equipment and the like, notwithstanding the fact that, at a drive time, the free end part is sufficiently in a free state having been made movable in an interstice portion, the vibration body is caught to the attached part in a free end part side when an external impact has been exerted, so that it is possible to prevent the vibration body from moving while exceeding the dimensions of the interstices. Here, if it is supposed that a lamination direction of the vibration body is a Z direction, between the attached part and the free end part, the interstices are provided in each of this Z direction and XY in-face directions intersecting with the Z direction, i.e., all directions of XYZ. Since the free end part becomes a butt when there has been exerted an external force capable of acting in an arbitrary direction, that external force is buffered by the interstices like these.

By this, it is possible to drive the driven body without the vibration being hindered, and it is possible to prevent the fact that, by an impact, the vibration body becomes a state in which the protrusion of the vibration body has been separated from the driven body and thus a feed quantity of the driven body fluctuates, and the fact that the vibration body impinges against the driven body and other component and so the breakage occurs, and the like. Here, from the fact that the vibration body directly opposes to the attached part and, when it is moved and deformed at an impact time, the vibration body is certainly captured by the attached part, and the fact that a place in which the vibration body is captured is the free end part side in which a deflection quantity becomes large at the impact time, an effect of an impact resistance is large. Accordingly, it is possible to greatly improve the impact resistance corresponding to a fall impact and the like without incurring the decrease in the drive efficiency, and it is possible to solve together problems relating to the drive efficiency and the impact resistance, which are usually difficult to be compatible.

Further, in order to obtain these advantages, since it is sufficient only if the interstices of the predetermined dimensions are set between the vibration body and the attached part, there is also no fact that a design becomes difficult.

Here, as to dimensions of the interstices, these are suitably determined in compliance with an amplitude and a direction of a vibration of the vibration body, a magnitude of the external force at the impact time, and the like.

For example, by setting a load condition to the vibration body at the impact time, and finding a maximum deflection quantity in the free end part of the vibration body at this load having been set, it is possible to determine the predetermined interstice dimension equal to or less than a maximum dimension having been found on the basis of this maximum deflection quantity and the like. By this, it is possible to ensure the impact resistance in a predetermined load condition. On the other hand, a tolerance occurring between the vibration body and the attached part due to a dispersion of a shape and an assembly error may be made a minimum dimension.

Additionally, as a meaning of the fact that such interstices as mentioned above are formed between the vibration body and the attached part under the state in which the impact is not exerted on the attached part from the outside, there is enumerated the fact that, at the drive time of the piezoelectric actuator, a vibration noise is difficult to occur in the electrode having been provided in the piezoelectric element and, by this, it is possible to beforehand prevent such a defect that a drive circuit is destroyed by an electric shock.

Further, in a case where a detection electrode detecting a vibration state of the piezoelectric element as a voltage signal is provided in one part of the piezoelectric element, the vibration noise is difficult to occur also as to this detection electrode and, by this, it is possible to accurately and certainly detect the vibration state, and it is possible to stably drive the piezoelectric actuator on the basis of this vibration detection. Incidentally, from the fact that the vibration detection is accurately and certainly performed like this, it becomes possible to dispose the detection electrode also to a site, in which an output of the vibration detection is small, such as a node vicinity of the vibration in the vibration body, and it is possible to facilitate an electrode layout in the piezoelectric element.

In a piezoelectric actuator of the present invention, the free end part has a vibration part which is formed like a plate of approximately rectangle in plane, which vibrates in a mixed mode of a longitudinal vibration expanding and contracting along its lengthwise direction and a flex vibration flexing in a short hand direction intersecting with the lengthwise direction, and in which the fixation part is provided in one of both side faces of the vibration part along the lengthwise direction, and an arm part which extends along a plane direction of the vibration part from the other side face of the vibration part, and which is disposed in the attached part through the interstices, so that the arm part is made a butt of the piezoelectric actuator.

According to this invention, by the arm part having been provided separately from the vibration part, it is possible to posses also the butt while certainly generating the longitudinal vibration and the flex vibration in the vibration part. By a function apportionment like this between the vibration part and the arm part, it is possible to more raise the drive efficiency and the impact resistance of the piezoelectric actuator.

Incidentally, in the plane direction of the vibration part, since the arm part faces on the attached part through the interstices, it is possible to improve the impact resistance as to the external force acting especially in a direction along the plane direction of the vibration part. Further, by the interstices in the plane direction like this, the longitudinal vibration displacing in the direction along a plate face of the vibration part is not impeded.

Additionally, although a moment follows upon the flex vibration, since the interstices are provided also in the lamination direction (Z direction) of the vibration body, the flex vibration is not impeded.

Here, it is desirable that the vibration part (including the protrusion), the fixation part and the arm part are monolithically formed.

In a piezoelectric actuator of the present invention, it is desirable that a characteristic vibration frequency of the arm part is separated by a predetermined value from a characteristic vibration frequency of the longitudinal vibration of the vibration part, and set so as not to interfere with the longitudinal vibration of the vibration part.

According to this invention, from the fact that the vibration of the arm part does not interfere with the longitudinal vibration of the vibration part, and the longitudinal vibration as a primary vibration by which the vibration part is excited does not attenuate, an induction of the flex vibration as a secondary vibration is not hindered.

In a piezoelectric actuator of the present invention, it is desirable that, as to a dimension of the arm part, a length dimension of the arm part in a lengthwise direction of the vibration part is shorter than a length dimension of the vibration part in the lengthwise direction, and, as to a dimension ratio concerned with a length of the arm part, a rate of the length dimension of the arm part to a width dimension of the arm part in a short hand direction of the vibration part is smaller than a rate of the length dimension of the vibration part to the width dimension in the short hand direction of the vibration part.

According to this invention, from the fact that the length dimension of the arm part is shorter than the length of the vibration part and, by the dimension ratio of the arm part, a shape of the arm part is not an elongate shape in comparison with the vibration part, the longitudinal vibration expanding and contracting along the lengthwise direction of the vibration part becomes dominant as a vibration mode of the arm part and, as to the vibration of the arm part, a higher vibration mode such as secondary and tertiary does not occur. By the fact that the vibration mode of the arm part is deemed to be only the longitudinal vibration like this, and the fact that, since the dimension of the arm part is smaller than the vibration part, a characteristic vibration frequency of the arm part becomes larger than a characteristic vibration frequency of the vibration part, so that it is possible to well avoid a vibration attenuation of the vibration part due to an interference by the fact a difference in the characteristic vibration frequency occurs between the arm part and the vibration part. Therefore, a range of the shape of the arm part, which is determined so as not to interfere with the vibration of the vibration part, is not narrowed.

In a piezoelectric actuator of the present invention, it is desirable that an area in which a length dimension of the arm part in a lengthwise direction of the vibration part has been multiplied by a width dimension of the arm part in a short hand direction of the vibration part is smaller than an area of the vibration part.

According to this invention, in a case where the area of the arm part is small in comparison with the area of the vibration part, and the arm part and the vibration part are formed by the same material, since the arm part is lighter in weight than the vibration part, it becomes possible to sufficiently separate the characteristic vibration frequency of the arm part and the characteristic vibration frequency of the vibration part, so that it is possible to well suppress the vibration attenuation of the vibration part due to the interference of the vibration of the arm part.

In a piezoelectric actuator of the present invention, it is desirable that in the arm part there is formed a hole, the attached part has a protrusion part protruding toward the hole and inserted through the hole, and the interstices are formed between an inner peripheral edge of the hole of the arm part and the protrusion part.

According to this invention, at the impact time, since an inner peripheral edge part of the hole of the arm part is locked to the protrusion part of the attached part, and an movement of the vibration part from an inside toward an outside of the hole is regulated, it is possible to improve the impact resistance.

On the other hand, at the drive time of the vibration body, since the vibration part becomes rotatable in an inner part of the hole of the arm part, the flex vibration, which is induced by unbalancing a disposition of the electrode and a position of the protrusion with respect to a barycenter of the vibration body, and which vibrates in a direction intersecting with the longitudinal vibration, can be avoided from being impeded by the attached part.

In a piezoelectric actuator of the present invention, it is desirable that the protrusion part has, in its protrusion direction midway, a step part, and the interstice is formed also between mutual opposed faces of the step part and the arm part.

According to this invention, by the fact that the protrusion part is inserted through the hole of the arm part, the interstices are formed also in the Z direction between the mutual opposed faces of the step part of the protrusion part and the arm part besides an XY direction between the inner peripheral edge of the hole of the arm part and the protrusion part, and structures through these interstices respectively function as the butt of the vibration body at the impact time. Like this, only by the structure concerned with the arm part, it is possible to possess in combination the impact resistance as to the external force acting in the plane direction (XY direction) of the vibration body and the impact resistance as to the external force acting in the lamination direction (thickness direction, Z direction) of the vibration body.

In a piezoelectric actuator of the present invention, it is desirable that the arm part is provided near a position of a node of the flex vibration of the vibration part.

According to this invention, since the arm part is provided near the position of the node of the flex vibration, an influence on a vibration characteristic by providing the arm part can be made small as far as possible.

Further, since a displacement due to the vibration is minimum near the position of the node, even if the dimension of the interstice between the inner peripheral edge of the hole and the protrusion part is made small, the vibration is not impeded, so that it is possible to more improve the impact resistance by making the interstice dimension small. In this case, as the predetermined interstice dimension, it is also possible to use a tolerance occurring between the vibration body and the attached part.

Here, the node of the flex vibration in the vibration part appears by three on a center line passing a plane center of the vibration part and along the lengthwise direction, and "a node of the flex vibration-of the vibration part" in which the arm part is provided means any of these three nodes. Among these three nodes of flex vibration, since the node of the flex vibration, which is placed in the plane center of the vibration part, is also a position of the node of the longitudinal vibration of the vibration part, it is more desirable that the arm part is provided near this plane center of the vibration part.

Incidentally, in "near a position of a node of the flex vibration", there is included a position in which a line having been extended along the short hand direction of the vibration part from the above-mentioned position of a node of the flex vibration intersects with an outer peripheral part (lengthwise direction side face of the vibration part) of the vibration part, and it is desirable that the arm part is provided in the position like this.

In a piezoelectric actuator of the present invention, it is desirable that the arm part is provided in the vibration part through an arm part side neck part of a constricted shape, which is linked to the vibration part, and the arm part side neck part is provided near a position of a node of the flex vibration of the vibration part.

According to this invention, by the fact that the arm part side neck part is provided near the node of the vibration part, a shape or the like of the arm part can be made free and, further by the fact that the arm part side neck part like this is provided, it is possible to decrease a vibration energy dissipating from the vibration part to the arm part, so that the drive efficiency can be improved.

In a piezoelectric actuator of the present invention, it is desirable that the fixation part is provided in the vibration part through a fixation part side neck part of a constricted shape, which is linked to the vibration part, and the fixation part side neck part is provided near a position of a node of the flex vibration of the vibration part, and in a position opposed to the arm part side neck part in a short hand direction of the vibration part.

That is, in a case where the vibration part, the fixation part and the arm part are monolithically formed in the reinforcing member having been made a sheet of steel plate or the like, which consists of a single material, the arm part side neck part and the fixation part side neck part are provided respectively in both sides of a center line passing the plane center of the vibration part and along the short hand direction in both side faces along the lengthwise direction of the vibration part.

According to this invention, since portions, in which the arm part and the fixation part have been provided in the vibration part through the respective neck parts, are respectively provided point-symmetrically as to the plane center of the vibration part, on an occasion of an external impact at a fall time or the like, it becomes possible to certainly capture the vibration part from a side becoming exactly opposite to the fixation part, which support-fixes the vibration part, by a butting structure in the arm part. By this, the fact is prevented that the vibration part having been cantilever-supported in the fixation part is shaken by the impact and thereby a displacement twisting in a radial direction from the fixation part is added to a vibration behavior of the vibration part. That is, also at a disturbance time like this, the vibration of the vibration part is normally maintained, and there can be prevented the fact that a drive quantity of the piezoelectric actuator fluctuates, and the like.

In a piezoelectric actuator of the present invention, it is desirable that the attached part has an opposed part facing on the free end part in a direction along a lamination direction of the vibration body, and the interstice is formed between the opposed part and the vibration body.

According to this invention, since the opposed part of the attached part has been disposed in the lamination direction of the vibration body with respect to the vibration body, it is possible to improve the impact resistance as to the external force acting especially in a direction along the lamination direction (thickness direction) of the vibration body.

In a piezoelectric actuator of the present invention, it is desirable that the attached part has a base member to which the vibration body is attachment-fixed, and a plate member disposed while nipping the vibration body between it and the base member, and the opposed parts are provided respectively in mutually facing portions of the base member and the plate member

According to this invention, since the opposed parts having been provided in the base member and the plate member respectively face on a free end part side of the vibration body and, by these opposed parts, there are prevented both of a movement of the free end part to a base member side at the impact time, and a movement of the free end part to a plate member side, it is possible to more improve the impact resistance.

In a piezoelectric actuator of the present invention, it is desirable that, in the driven body, a butted face against which the protrusion is butted is formed approximately like a plane.

According to this invention, as mentioned above, at the impact time, since the vibration body is captured by the attached part, and the protrusion of the vibration body is not separated from the driven body, there is no necessity for forming, in the butted face of the driven body, an indentation and the like for holding the protrusion. By this, it becomes possible to easily manufacture the driven body by a press blanking and the like.

Incidentally, as a plane shape of the driven body, there can be adopted arbitrary one such as circular shape and rectangular shape.

An electronic equipment of the present invention is characterized by having possessed a piezoelectric actuator mentioned above.

Here, the piezoelectric actuator can be used in, e.g., the zoom mechanism and the autofocus mechanism of the camera, and the like.

According to this invention, by having possessed the piezoelectric actuator mentioned above, it is possible to enjoy the actions and the effects, which are similar to ones mentioned above.

It is desirable that an electronic equipment of the present invention is a timepiece having possessed a clock means, and a clock information display part displaying an information having been clocked by the clock means. According to this invention, it becomes possible to drive a gear wheel and the like, which constitute the clock means and the clock information display part, by the piezoelectric actuator mentioned above. By this, it is possible to eliminate such a defect that a feed quantity of the driven body fluctuates by the impact and thus indication positions of a day, a month and a day of the week deviate.

In addition, there can be realized advantages in the piezoelectric actuator, i.e., not subjected to an influence of magnetism, a responsiveness is high, a minute feed is possible, advantageous in miniaturization and thinning, a high torque, and the like.

Brief Description of the Drawings

[Fig. 1] An external appearance view of a timepiece in a first embodiment of the present invention.
[Fig. 2] A front view of a movement in the first embodiment.
[Fig. 3] A main part enlarged view of Fig. 2, which shows a piezoelectric actuator.
[Fig. 4] A side sectional view of the piezoelectric actuator in the first embodiment.
[Fig. 5] A side sectional view of the piezoelectric actuator in the first embodiment.
[Fig. 6] A view showing a dimension of each part in the piezoelectric actuator having been shown in Fig. 3.
[Fig. 7A] A graph showing, about a vibration body in the first embodiment, a relation between a drive frequency and an impedance.
[Fig. 7B] A graph showing, about the vibration body in the first embodiment, relations between the drive frequency and amplitudes of a longitudinal vibration and a flex vibration.
[Fig. 8] A side sectional view of a piezoelectric actuator in a second embodiment of the present invention. Description of Reference Numeral and Signs

| | |
|---|---|
| 1 | wristwatch (timepiece) |
| 14 | main plate (base member) |
| 31 | piezoelectric actuator |
| 32 | rotor (driven body) |
| 50 | vibration body |
| 51 | reinforcing plate (reinforcing member) |
| 52, 53 | piezoelectric element |
| 54 | maintaining plate (plate member) |
| 142 | screw pin (attached part) |
| 144 | protrusion part |
| 144A | large diameter part (step part) |
| 144B | small diameter part (step part) |
| 144C | opposed face |
| 322 | butted face |
| 511 | vibration part |
| 511A | protrusion |
| 512 | fixation part |
| 512A | neck part (fixation part side neck part) |
| 513 | arm part |
| 513A | neck part (arm part side neck part) |
| 513B | hole |
| 513C | opposed face |
| 541 | stepped-down part (opposed part) |
| 74 | main plate (base member) |
| 741 | pin part (opposed part) |
| 75 | maintaining plate (plate member) |
| 751 | convex part (opposed part) |
| FR | free end part |

SP1, SP2, SP3, SP4     interstice
A     node position
$L_1$     length (length dimension of vibration part)
$L_3$     length (length dimension of arm part)
$W_1$     width (width dimension of vibration part)
$W_3$     width (width dimension of arm part)

Best Mode for Carrying Out the Invention

Hereunder, there are explained about embodiments of the present invention by referring to the drawings. In the following embodiments, there is exemplified about a case where the present invention has been applied to a wristwatch.

[First embodiment]

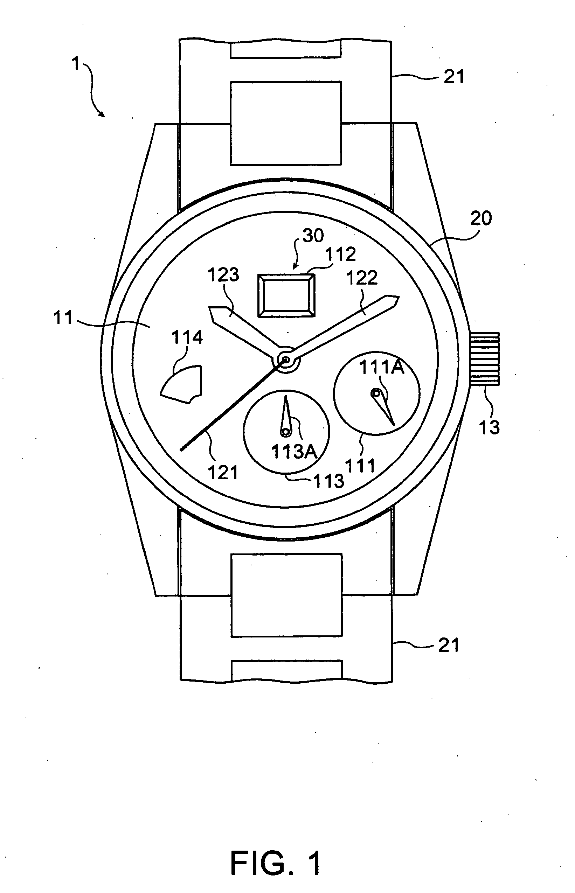

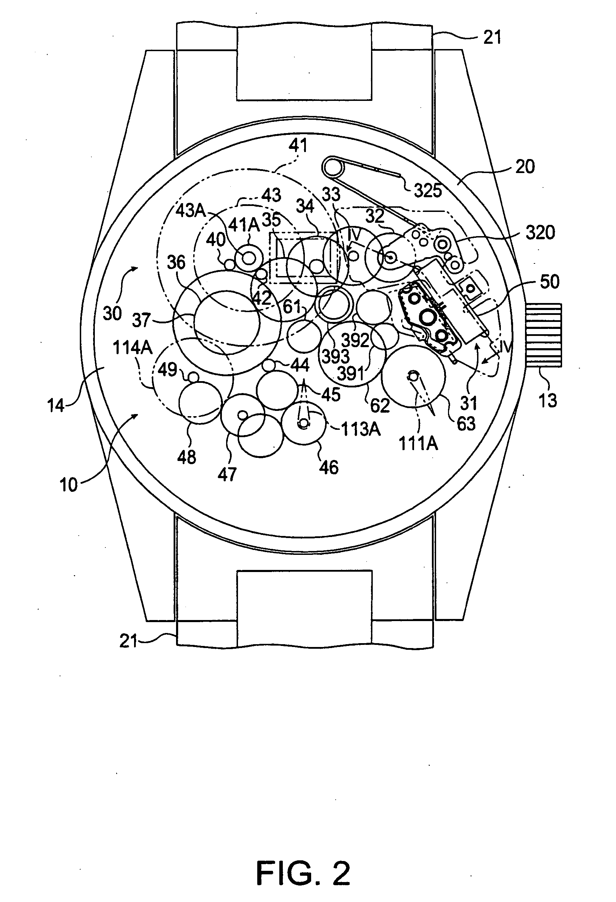

Fig. 1 is a view showing an external appearance constitution of a wristwatch 1 concerned with a first embodiment of the present invention.
The wristwatch 1 is a wristwatch (watch) having possessed a movement 10 (Fig. 2) and a case 20 accommodating this movement 10, and wristbands 21 are provided in a 12 o'clock position and a 6 o'clock position of the wristwatch 1. Although a kind of a timepiece may be any of a quartz timepiece, a mechanical timepiece and an electronic control type mechanical timepiece, the wristwatch 1 of the present embodiment is constituted as an analog quartz timepiece.
The wristwatch 1 has a disc-like dial 11, a second hand 121, a minute hand 122, an hour hand 123, and a crown 13.
Further, in the dial 11, there is provided a circular 24-hour display part 111 and, by a rotation of a 24-hour display hand 111A in this 24-hour display part 111, "0" o'clock - "23" o'clock are indicated.
Additionally, the wristwatch 1 possesses a calendar mechanism 30 displaying a calendar and, concerning with this calendar mechanism 30, in the dial 11 there are provided respectively a rectangular day display window 112, a circular month display part 113, and an approximately fan shape year display window 114.
In the day display window 112, there is displayed any of numerals of "1" - "31", which shows a "day" of the calendar. As mentioned later, numerals of the ones place and numerals of the tens place of the "day" are appended to separate date indicators.
Further, in the month display part 113, along its circumference, displays of "JAN" - "DEC" showing a "month" of the calendar are disposed in the same interval, and the "month" of the calendar is displayed by the fact that these displays are indicated by a month display hand 113A.
And, in the year display window 114, there is displayed any of numerals of "0" - "4", which shows what number the year is from a leap year.
Fig. 2 is a view showing the movement 10.
In the movement 10, there is disposed a main plate 14 which is approximately circular in plane. Incidentally, although the main plate 14 in the present embodiment is made of a resin, it may be made of a metal or the like.
Here, since a constitution for driving the second hand 121, the minute hand 122 and the hour hand 123 (Fig. 1) is one which is provided in a face of the main plate 14 in a wristwatch 1 back side and similar to a usual analog quartz, a diagrammatic representation is omitted, but it is constituted while possessing a circuit substrate in which a quartz crystal vibrator has been incorporated, a stepping motor having a coil, a stator and a rotor, a drive train wheel, and a battery that is a power source. In this constitution, the stepping motor is driven by a pulse signal which is oscillated by the quartz crystal vibrator and has- been frequency-divided through a circuit block. And, by the fact that a driving force of the stepping motor is transmitted to a drive train wheel, there are driven the second hand 121, the minute hand 122 and the hour hand 123, respectively. Regardless of a number of the stepping motors, there may be provided two stepping motors in total, e.g., one for a drive of the second hand 121 and one for drives of the minute hand 122 and the hour hand 123.
On the other hand, as shown in Fig. 2, in a face of the main plate 14 in a wristwatch 1 front side, there is disposed the calendar mechanism 30.
A drive means of this calendar mechanism 30 is a piezoelectric actuator 31 having utilized as vibration by an inverse piezoelectric effect of a piezoelectric element. The piezoelectric actuator 31 possesses a vibration body 50 having the piezoelectric element and, by a vibration of this vibration body 50, repeatedly presses an outer peripheral part of a rotor 32 as a driven body, thereby rotation-driving the rotor 32. An intermediate wheel 33 meshes with this rotor 32, and the intermediate wheels 33 - 35 mesh successively. And, the intermediate wheel 35 meshes with a control wheel pinion 36, and this control wheel pinion 36 is formed monolithically with a control wheel 37 controlling a feed of the calendar. A constitution till here is a deceleration train wheel for rotating the control wheel 37.
The control wheel 37 possesses plural pawl wheels (not shown in the drawing) whose pawl numbers are different, and these pawl wheels mesh respectively with a ones-place date indicator driving wheel 40, a tens-place date indicator driving wheel 42, and a month display intermediate wheel 44.

Here, in an outer peripheral front face of a ones-place date indicator 41 fed by the ones-place date indicator driving wheel 40, numerals of "0" - "9" are displayed in a circumferential direction in the same interval and, in an outer peripheral front face of a tens-place date indicator 43 of the tens-place, which is fed by the tens-place date indicator driving wheel 42, "vacant region" and numerals of "1" - "3" are displayed in a circumferential direction in the same interval. Incidentally, the "vacant region" is a region in which there is no description of the numeral.

Among the pawl wheels that the control wheel 37 has, the ones-place date indicator driving wheel 40 and a ones-place date pinion 41A rotate through a ones-place feed pawl, the ones-place date indicator 41 rotates monolithically with these, and the numerals "0" - "9" on its outer peripheral front face are fed in the circumferential direction by one in a rate of one time per one day. In compliance with this rotation of the control wheel 37, a rotation of the ones-place date indicator 41 advances and, if there reaches to a date in which the tens place is moved up, the tens-place date indicator driving wheel 42 and a tens-place date pinion 43A rotate through a tens-place feed pawl of the control wheel 37, and the tens-place date indicator 43 rotates monolithically with the tens-place date pinion 43A, so that the "vacant region" or the numerals "1" - "3" on an outer peripheral front face of the tens-place date indicator 43 is/are fed in the circumferential direction by one in a rate of one time per ten days.

By this, in the day display window 112, there is displayed any of the numerals "1" - "31" showing the "day" of the calendar by a combination of the ones-place numerals "0" - "9" on the ones-place date indicator 41 and the "vacant region" or the tens-place numerals "1" - "3" on the tens-place date indicator 43.

And, by a rotation of the control wheel 37, the rotations of the ones-place date indicator 41 and the tens-place date indicator 43 advance and, if there reaches to a date in which the display of the "month" is moved up, the month display intermediate wheel 44 and a month detection wheel 45 rotate through a month feed pawl of the control wheel 37, so that a month wheel 46 rotates monolithically with the month detection wheel 45. And, a month display hand 113A having been attached to the month wheel 46 rotates, and there is indicated a display of any of "JAN" - "DEC" on the month display part 113 (Fig. 1).

A year display intermediate wheel 47 meshes with the month detection wheel 45, and a year feed wheel 48 meshes with this year display intermediate wheel 47. And, a year wheel 49 rotating a year display wheel 114A meshes with this year feed wheel 48. The year display wheel 114A is fed by one time per one year by the year wheel 49 and, in the year display window 114 (Fig. 1), the numerals "0" - "4" are displayed in order. By this, there is displayed what number the year is from the leap year.

Incidentally, in the calendar mechanism 30, there is provided a calendar correction train wheel (in Fig. 2, gear wheels 391, 392, 393) and, if the crown 13 is pulled out to an outside of the case 20, the crown 13 meshes with the intermediate wheel 35 through this calendar correction train wheel, and a correction of the calendar is made possible by rotating the crown 13.

On the other hand, a structure for driving the 24-hour display hand 111A having been provided in the 24-hour display part 111 (Fig. 1) has a 24-hour detection wheel 62 meshing with an hour wheel 61 to which the hour hand 123 has been attached and detecting the 24 o'clock (a.m. 0 o'clock) from a rotation quantity of the hour wheel 61, and a 24-hour wheel 63 which meshes with this 24-hour detection wheel 62 and to which the 24 o'clock display hand 111A has been attached.

In the 24-hour detection wheel 62, there are provided an encoder detecting, from the rotation quantity of the hour wheel 61, the fact that it is "24 o'clock", and a spring switch becoming an ON-state by a timing of a "24 o'clock" detection by the encoder.

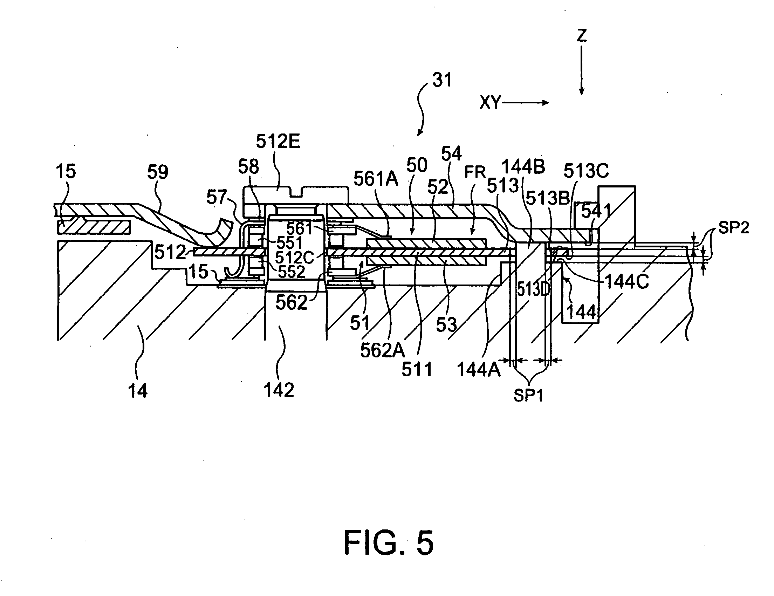

In this 24-hour detection wheel 62, there is provided a spring switch connected to a control block having been mounted to a circuit board 15 (Fig. 5) having been provided in the main plate 14 and, by turning ON of this spring switch, the calendar mechanism 30 is driven. On this occasion, first, there is implemented a one day feed treatment for rotation-driving the calendar mechanism 30 by for one day, and there is implemented a calendar detection treatment which detects the fed day to thereby judge whether or not it is an existing day and, if it is judged that it is a non-existing day, there is implemented a calendar correction treatment performing a so-called month-end correction by driving the calendar mechanism 30 in order to display an actual existing day.

Hereunder, the piezoelectric actuator 31 which is most characteristic in the present invention, and its peripheral constitution are explained in detail.

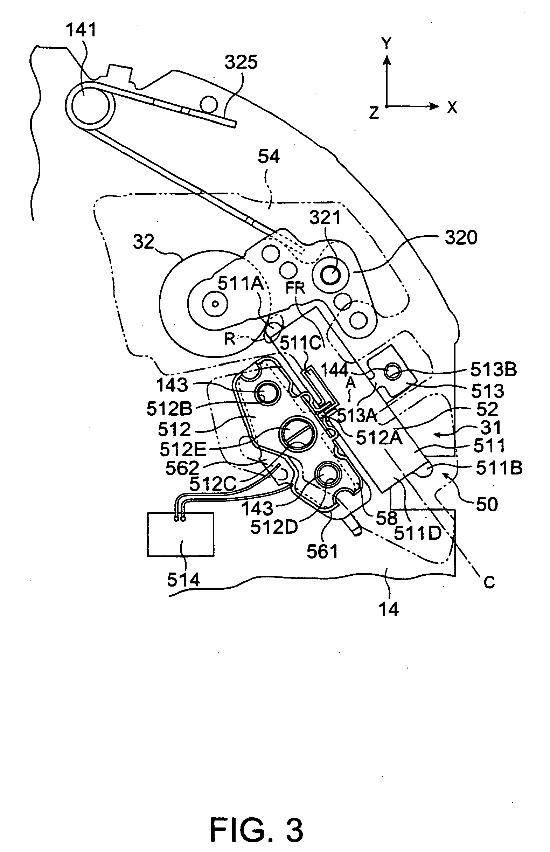

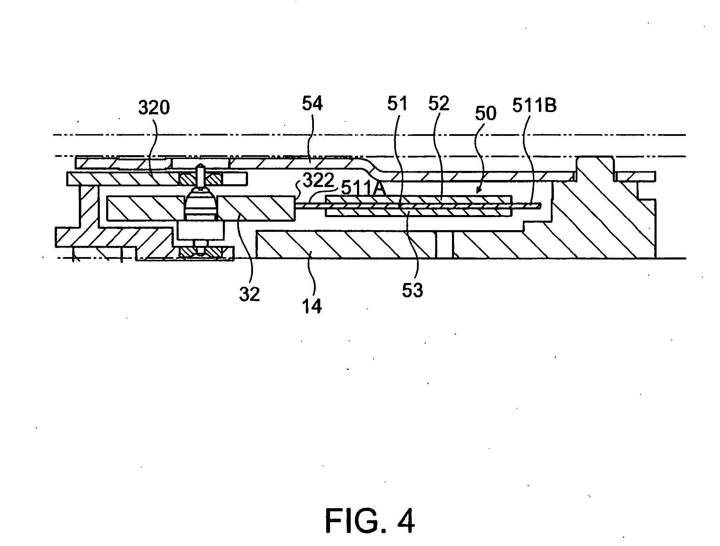

Fig. 3 is a view showing the piezoelectric actuator 31 together with the peripheral constitution, and Fig. 4 is a view seen in an arrow line IV - IV in Fig. 2. Further, Fig. 5 is a sectional view of the piezoelectric actuator 31.

The rotor 32 driven by the piezoelectric actuator 31 is rotatably held to a rotor support body 320.

The rotor support body 320 is disposed swingably about a pin 321, and the rotor 32 is butted against the vibration body 50 by the fact that this rotor support body 320 is biased counterclockwise in Fig. 3, i.e. to a piezoelectric actuator 31 side, by a push spring 325 having been wound around a shaft 141 having been provided in the main plate 14. By this, a contact pressure between the rotor 32 and the vibration body 50 is kept to a suitable pressure capable of efficiently rotating the rotor 32 at a drive time of the piezoelectric actuator 31, so that there is sufficiently ensured a feed quantity per unit time of the rotor 32 by the vibration body 50.

Here, the rotor 32 is manufactured by means such as a press blanking and, as shown in Fig. 4, a butted face 322 against which the vibration body 50 of the rotor 32 is butted is formed like a plane having no irregularities.

As shown in Fig. 5, the vibration body 50 of the piezoelectric actuator 31 is constituted by a reinforcing plate (reinforcing member) 51 having been formed by a rolling of a metal material such as stainless steel, and rectangular plate-like piezoelectric elements 52, 53 having been laminated on both faces of the reinforcing plate 51.

Further, a maintaining plate 54 (in Fig. 3, shown by a two-dot chain line) as a plate member is disposed so as to be covered to the vibration body 50.

Here, as shown in Fig. 5, in the main plate 14, a screw pin 142 as an attached part is formed so as to protrude in a Z direction intersecting with a plane direction (in Fig. 3, an XY direction) of the reinforcing plate 51, and the vibration body 50 is attachment-fixed to this screw pin 142.

Further, one pair of positioning pins 143 (Fig. 3) for positioning the vibration body 50 are protrusively formed respectively in both sides of this screw pin 142, and an approximately cylindrical protrusion part 144 is formed in a position nipping the positioning pin 143 and the vibration body 50 so as to protrude similarly in the plane direction of the reinforcing plate 51.

The protrusion part 144 is provided near a position bisecting long sides of the piezoelectric elements 52, 53. Further, the protrusion part 144 has a large diameter part 144A (main plate 14 side) and a small diameter part 144B, which have been mutually disposed on the same center, and a step part is formed by the large diameter part 144A and the small diameter part 144B.

Incidentally, a protrusion dimension of the protrusion part 144 is smaller than a protrusion dimension of the screw pin 142 and, in a portion of this protrusion part 144, the maintaining plate 54 is stepped-down-formed toward the main plate 14 and mounted to a tip of the protrusion part 144.

A material of the piezoelectric elements 52, 53 is not limited especially, and there can be used various ones such as, titanic acid zirconate (PZT (registered trademark)), quartz crystal, lithium niobate, barium titanate, titanate, metaniobate, polyvinylidene fluoride, zirconium niobate, and scandium niobate.

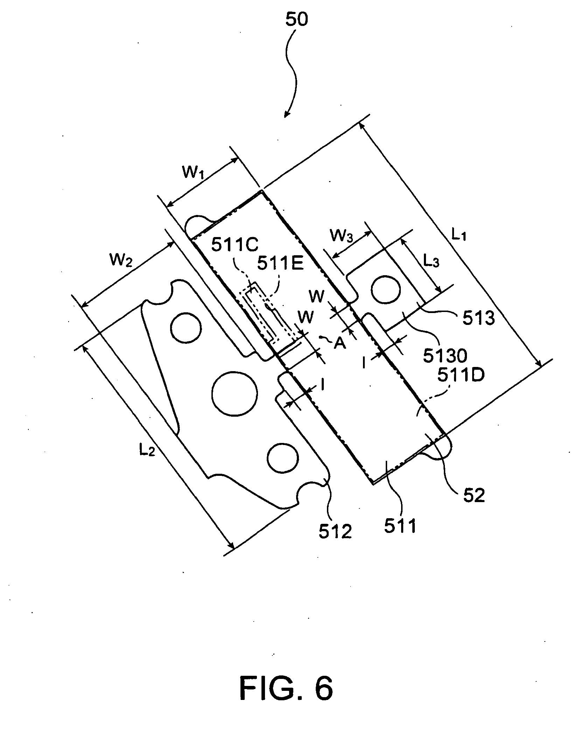

Further, in the whole of front-back both faces of the piezoelectric elements 52, 53, electrodes are formed by a plating, a sputtering, a vapor deposition and the like by nickel, gold and the like, and whole face electrodes (not shown in the drawing) having been formed in back face sides of the piezoelectric elements 52, 53 are overlapped with the reinforcing plate 51 and conducted to the reinforcing plate 51. On the other hand, the electrodes of the piezoelectric elements 52, 53 in front face sides are formed respectively with a detection electrode 511C which is partitioned by a groove 511E (Fig. 6) by an etching and detects the vibrations of the piezoelectric elements 52, 53 as voltage signals by the piezoelectric effect, and a drive electrode 511D to which a drive voltage is applied.

In Fig. 6, the detection electrode 511C and the drive electrode 511D have been shown respectively by a two-dot chain line. A region excluding the detection electrode 511C of the electrode having been formed in piezoelectric elements 52, 53 front faces is made the drive electrode 511D. Dispositions of the detection electrode 511C and the drive electrode 511D are made similar in the piezoelectric elements 52, 53 with the reinforcing plate 51 being nipped and, in a back face side of the detection electrode 511C of the piezoelectric element 52 for instance, there is formed the detection electrode 511C of the piezoelectric element 53. Incidentally, in Fig. 6, in making the figure, although the two-dot chain line has been shown in an inside than an outer peripheral end edge of the piezoelectric element 52, the detection electrode 511C and the drive electrode 511D are formed till outer peripheral end edges of the piezoelectric elements 52, 53 as having been shown in Fig. 3.

Here, in width direction one end sides (one long-side sides) of the piezoelectric elements 52, 53, the detection electrode 511C extends with a length corresponding to about 1/5 - about 1/3 of the long sides of the piezoelectric elements 52, 53 along a longitudinal direction of the piezoelectric elements 52, 53 from the vicinity of a plane center (refer to a position A) of the piezoelectric elements 52, 53, and a width of the detection electrode 511C is made a dimension corresponding to about 1/6 - 1/3 of the piezoelectric elements 52, 53. Like this, an area of the detection electrode 511C is considerably smaller than the drive electrode 511D. Incidentally, as mentioned later, the position A is a node position of a flex vibration in the vibration body 50, and the detection electrode 511C is disposed approximately near the node position A of the flex vibration in the vibration body 50.

Further, in Fig. 3 there has been schematically shown a drive control circuit 514 (IC chip) applying a drive voltage to the piezoelectric elements 52, 53. This drive control circuit 514 is mounted to the circuit board 15 (Fig. 5), and conducted respectively to the reinforcing plate 51 and a lead board 561. Through the reinforcing plate 51 and the lead board 561, the drive voltage is applied between the reinforcing plate 51 and the drive electrode 511D, and a vibration signal is detected as a differential signal of the detection electrode 511C with respect to an electric potential of the reinforcing plate 51.

Incidentally, about a concrete electric and electronic equipment relation of the piezoelectric actuator 31, there is mentioned later by referring to Fig. 5.

Next, as shown in Fig. 3, the reinforcing plate 51 monolithically has a fixation part 512 attachment-fixed to the screw pin 142, and a free end part FR in which the piezoelectric elements 52, 53 are disposed.

The free end part FR is formed like a plate of approximately rectangle in plane, which has corresponded to shapes of the piezoelectric elements 52, 53, and has a vibration part 511 in which the fixation part 512 is provided in one side face along its lengthwise direction, and an arm part 513 extending from the other side face part of this vibration part 511.

Further, the vibration part 511 has protrusions 511A, 511B protruding like an arc along the longitudinal direction respectively in both side faces in short-side sides. Each of the protrusions 511A, 511B is an arc shape whose radius is 0.25 mm, disposed respectively in a point symmetry position as to the node position A (plane center) of the flex vibration of the vibration part 511, and the one protrusion 511A butts against the rotor 32.

Like this, a position in which each of the protrusions 511A, 511B has been formed is formed in a position which has deviated from a center line C along the lengthwise direction of the vibration part 511 and which has been formed in an unbalanced position for a longitudinal primary vibration along the lengthwise direction of the vibration part 511 and, if the longitudinal primary vibration is excited by the voltage application to the piezoelectric elements 52, 53, a flex secondary vibration is induced in a direction intersecting with the lengthwise direction of the vibration part 511.

The fixation part 512 is provided near the node position A of the flex vibration excited in the direction intersecting with the lengthwise direction of the vibration part 511, and has a neck part 512A as a fixation part side neck part linked to the vibration part 511.

Further, as shown in Fig. 3, in the fixation part 512, plural holes 512B, 512C, 512D are provided while being juxtaposed in the lengthwise direction of the vibration part 511. Among these, through the holes 512B, 512D of both sides, there are respectively inserted the positioning pins 143 and, through the hole 512C of a center, there is inserted the screw pin 142 (Fig. 5).

Here, as shown in Fig. 5, in the fixation part 512, there are provided spacers 551, 552 and lead boards 561, 562 as a constitution concerned with conductions of the piezoelectric elements 52, 53.

The spacers 551, 552 are formed, in their plane shapes, in approximately the same shape as the fixation part 512, and bonded respectively to both face sides around the hole 512C of the fixation part 512. To these spacers 551, 552, the lead boards 561, 562 are bonded.

Further, copper foils (wiring patterns) 561A, 562A having been overhung from lead boards 561, 562 are soldered respectively to the piezoelectric elements 52, 53.

Incidentally, the lead boards 561, 562 are disposed such that the copper foils 561A, 562A are directed to outsides (sides opposite to the reinforcing plate 51).

And, when fixing the fixation part 512 to the main plate 14, a spring member 57 is assembly-disposed to the lead board 561, and the spring member 57 is contact-conducted to the circuit board 15. By this spring member 57, the respective electrodes having been provided in both outsides of the piezoelectric elements 52, 53 while nipping the reinforcing plate 51 are made mutually the same electric potential.

Additionally, an insulation plate 58 is disposed in the spring member 57, and the screw pin 142 is inserted through each hole having been formed in the spacers 551, 552, the lead boards 561, 562 and the insulation plate 58. By the fact that a screw 512E is meshed, through a hole of the maintaining plate 54, with a female hole having been formed in this screw pin 142, the vibration body 50 is attachment-fixed to the main plate 14.

Incidentally, in the present embodiment, a restriction state of the reinforcing plate 51 is one in which a rotation of the reinforcing plate 51 is regulated by the fact that the positioning pin 143 and the screw pin 142 are inserted through the plural holes 512B - 512D (Fig. 3), and a flutter in a direction intersecting with a plane of the reinforcing plate 51 has been regulated by the fixation of the screw 512E.

Here, the maintaining plate 54 has a spring part 59 which is contact-conducted with a reference electric potential of the circuit board 15, and contact-conducted to the reinforcing plate 51. The maintaining plate 54 is conducted to insides of the piezoelectric elements 52, 53 through the spring part 59 and the reinforcing plate 51. This maintaining plate 54 and the spring member 57 are made separate electric potentials by the insulation plate 58.

By an attachment fixation to the main plate 14 by the fixation part 512 like this, the vibration body 50 is cantilever-fixed and, if it is deemed that the vibration body 50 is a beam having been cantilever-supported, the vibration part 511 and the arm part 513, which are not fixed to the main plate 14, are made the free end part FR of the vibration body 50.

As shown in Fig. 3, the arm part 513 extends toward the protrusion part 144 from a neck part 513A as an arm part side neck part linked to the vibration part 511, and is formed in an approximately rectangular shape.

Similarly to the fixation part 512, this arm part 513 is provided near the node position A of the flex vibration of the vibration part 511, and the arm part 513 and the neck parts 513A, 512A of the fixation part 512. are provided in positions mutually opposing in a short hand direction of the vibration body 511.

Further, in the arm part 513, there is formed a hole 513B through which the small diameter part 144B of the protrusion part 144 is inserted.

In regard to dimensions of the arm part 513 and the neck parts 513A, 512A of the fixation part 512, which have been mentioned above, concrete numerical values are exemplified by referring to Fig. 6. In a case where a width $W_1$

(short side) in the short hand direction of the vibration body 511 is 1.98 mm and a length $L_1$ (long side) in the lengthwise direction is 7 mm, it is desirable that widths w of these neck parts 513A, 512A in a vibration part 511 lengthwise direction are set to about 0.4 - 0.6 mm. It is desirable that this width w is set to a dimension of about 5 - 8% of the length $L_1$ of the vibration part 511, and it is more desirable to be set to a dimension of about 6 - 7%. Incidentally, in a case where it is less than 5%, it does not endure the vibration at a usual time in the vibration part 511 from a viewpoint of strength and, if it exceeds 8%, there could become a hindrance to the longitudinal vibration in the vibration part 511.

Additionally, it is desirable that lengths 1 of the neck parts 513A, 512A in the vibration part 511 lengthwise direction are shorter than the width w. It is desirable that the length 1 is in the order of about 90% $\pm$ 5% of the width w.

Here, although it is necessary that a characteristic vibration frequency of the arm part 513 following upon the vibration of the vibration part 511 is determined so as not to interfere with the vibration of the vibration part 511, in a case where a shape of the arm part 513 has been tentatively made an elongate shape, as to the vibration of the arm part 513 there occurs a higher vibration mode such as secondary and tertiary, so that there is narrowed a range in which the shape of the arm part 513 can be set so as not to interfere with the vibration of the arm part 513.

Accordingly, the shape of the arm part 513 is set while avoiding the elongate shape, and concretely there has been made such that a length dimension of the arm part 513 in the lengthwise direction of the vibration part 511 becomes shorter than the vibration part 511 and the fixation part 512 whose length is shorter than this vibration part 511. That is, referring to Fig. 6, a length $L_3$ of the arm part 513 is shorter than a length $L_2$ of the fixation part 512 and the length $L_1$ of the vibration part 511. And, although a width $W_3$ of the arm part 513 is smaller than the length $L_3$ of the arm part 513, a ratio of the length $L_3$ to this width $W_3$ is made smaller than a ratio of the length $L_1$ to the width $W_1$ of the vibration part 511 and a ratio of the length $L_2$ to the width $W_2$ of the fixation part 512. In other words, the shape of the arm part 513 is not made elongate in comparison with the fixation part 512 and the vibration part 511.

By this, as to a vibration mode by which the arm part 513 is excited, the longitudinal vibration along the lengthwise direction of the vibration part 511 becomes dominant and, by sufficiently separating the characteristic vibration frequency of this arm part 513 from a characteristic vibration frequency of the vibration part 511, it is possible to avoid an attenuation of the vibration due to the interference.

Incidentally, by the dimension of the arm part 513 like this, since an area of the arm part 513 is small in comparison with an area of the fixation part 512 and an area of the vibration part 511, and the arm part 513 is lighter in weight than the fixation part 512 and the vibration part 511, it becomes possible to sufficiently separate the characteristic vibration frequency of the arm part 513 and the characteristic vibration frequency of the vibration part 511, so that it is possible to well suppress a vibration attenuation of the vibration part 511 due to the interference of the vibration of the arm part 513.

By the shape of the arm part 513 like this, it is possible to consider the vibration of the arm part 513 as problems of a mass and a spring constant, and if it is supposed that the width of the arm part 513 is $W_3$ (Fig. 6), a thickness of the arm part 513 t, the length of the arm part 513 $L_3$ (Fig. 6), a mass of the arm part 513 m and a Young's modulus E of the reinforcing plate 51, a characteristic vibration frequency P of the arm part 513 is expressed by the following mathematical formula (1).

### [Mathematical formula 1]

$$P = \sqrt{\frac{W_3{}^3 tE}{4mL_3{}^3}} \ [rad/sec] \ \cdots \ (1)$$

On the other hand, a concrete value of the characteristic vibration frequency of the arm part 513 is determined by a relation with the characteristic vibration frequency of the longitudinal vibration of the vibration part 511 and a frequency of the drive voltage applied to the piezoelectric actuator 31. Incidentally, as to the frequency (drive frequency) of the drive voltage, there is determined by considering a resonance point of the longitudinal vibration, a resonance point of the flex vibration and the like in the vibration part 511.

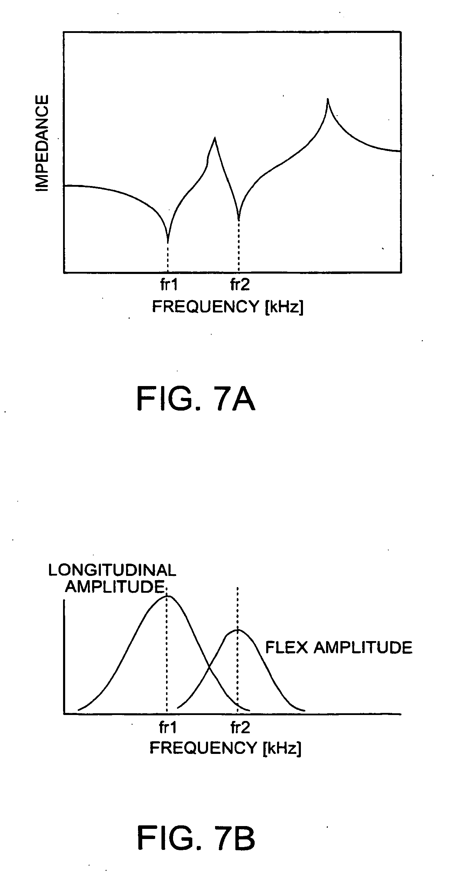

In Fig. 7A, there has been shown a relation between a drive frequency and an impedance in the vibration part 511 and, in Fig. 7B, there have been shown relations between the drive frequency and an amplitude of the longitudinal vibration and an amplitude of the flex vibration. As shown in Fig. 7A, the resonance point in which the impedance is minimum with respect to the drive frequency and whose amplitude becomes maximum appears by two points and, between them, one whose frequency is low becomes the resonance point of the longitudinal vibration, and higher one the resonance point of the flex vibration.

That is, if a vibration body 20A is driven between a longitudinal resonance frequency fr1 of the longitudinal vibration and a flex resonance frequency fr2 of the flex vibration, the amplitudes of both of the longitudinal vibration and the flex vibration are ensured, and the piezoelectric actuator 31 is driven at a high efficiency. Incidentally, by mutually adjoining the longitudinal resonance frequency fr1 and the flex resonance frequency fr2, it is possible to set the drive frequency in which the amplitudes of the longitudinal vibration and the flex vibration become large.

In the present embodiment, the longitudinal resonance frequency (characteristic vibration frequency of the longitudinal vibration) of the vibration part 511 is about 200 kHz and, in view of Fig. 7A and Fig. 7B or the like, the drive frequency is determined in a range of about 230 kHz - about 300 kHz. Here, it is considered that, if the characteristic vibration frequency of the arm part 513 is separated by about 5%, i.e., 10 kHz or more as a predetermined value, with respect to the characteristic vibration frequency 200 kHz of the longitudinal vibration, it is considered that the vibration of the arm part 513 does not interfere with the vibration of the vibration part 511. In a case where the drive frequency is made 250 kHz, this predetermined value 10 kHz becomes 4% with respect to the drive frequency. If made like this, the vibration of the arm part 513 does not interfere with the longitudinal vibration of the vibration part 511 and, if the longitudinal vibration as a primary vibration by which the vibration part 511 is excited does not attenuate, an induction of the flex vibration as a secondary vibration is not hindered. In regard to a setting of the characteristic vibration frequency of the arm part 513, there can be expressed by the following conditional formula (2-1) and conditional formula (2-2).

[Conditional formula 2]

$$\frac{1}{2\pi}\sqrt{\frac{W_3{}^3 tE}{4mL_3}} < (\text{Longitudi nal resonance frequency of vibration part}) - 10\,\text{kHz} \quad \cdots \quad (2\text{-}1)$$

$$(\text{Longitudi nal resonance frequency of vibration part}) + 10\,\text{kHz} < \frac{1}{2\pi}\sqrt{\frac{W_3{}^3 tE}{4mL_3}} \quad \cdots \quad (2\text{-}2)$$

By the way, in a case where the wristwatch 1 has been subjected to the impact from an outside by the fall and the like, if this impact force acts in a direction pushing the rotor 32 and the vibration body 50, there is a fear that a breakage occurs in the vibration body 50 or the rotor 32. Further, if the external impact force acts in the above direction at a drive time of the piezoelectric actuator 31, an amplification quantity of the piezoelectric actuator 31 becomes small, so that there is a fear that it becomes impossible to sufficiently feed the rotor 32. Additionally, there is a fear that the vibration body 50 impinges against other component by the impact, thereby being broken down.

Whereupon, as an impact-resistant structure, there has been made such that, when the piezoelectric actuator 31 has been incorporated to the main plate 14, interstices SP1, SP2 are formed between the arm part 513 and the protrusion part 144 of the main plate 14 as shown in Fig. 5. That is, between an inner peripheral edge of the hole 513B of the arm part 513 and the small diameter part 144B of the protrusion part 144, the interstice SP1 is formed along a plane direction (XY direction) of the reinforcing plate 51 and, between mutual opposed faces 513C, 144C of the arm part 513 and the large diameter -part 144A, the interstice SP2 is formed along a thickness direction Z (approximately the same as a lamination direction of the piezoelectric elements 52, 53 and the reinforcing plate 51) of the wristwatch 1. Further, also between a stepped-down part 541 of the maintaining plate 54 and an opposed face 513D, of the arm part 513, facing on this stepped-down part 541, the interstice SP2 is formed along the thickness direction Z of the wristwatch 1.

These interstices SP1, SP2 are respectively formed under a state in which the external impact is not exerted and, by these interstices SP1, Sp2, the free end part FR is made movable, the vibration of the vibration part 511 is ensured, a movement of the vibration part 511 is limited within ranges of these interstices SP1, SP2, and the vibration part 511 does not move more than the dimensions of the interstices SP1, SP2. Therefore, it is possible to prevent the vibration part 511 from impinging against other component such as the rotor 32.

Dimensions of these interstices SP1, SP2 are prescribed by a direction and an amplitude of the vibration of each of the longitudinal vibration and the flex vibration, or the like and, in addition, set from relations among a maximum deflection quantity in the free end part FR when the wristwatch 1 has been subjected to the impact, an internal stress occurring in the neck part 512A following upon a uniformly distributed load of the vibration body 50 having been deemed to be a beam, and a strength of stainless steel that is a material of the reinforcing plate 51. In other words, there is made such that, even if a displacement and a deformation of the vibration body 50 occur at the impact time, the vibration part 511 does not move while exceeding ranges of the interstices SP1, SP2, so that there is no such an obstacle that the neck part 512A is snapped.

Incidentally, since it is possible to improve an impact resistance by decreasing the dimensions of the interstices SP1, SP2 to such a degree that the vibration is not impeded, it is also possible to determine tolerances occurring between the vibration body 50 and the protrusion part 144 due to fluctuation in shapes and assembly errors of the reinforcing plate 51 and the piezoelectric elements 52, 53, as the dimensions of the interstices SP1, SP2.

Here, although a load condition to the wristwatch 1 at the impact time changes by a posture and a position of the wristwatch 1 when the wristwatch 1 has fallen or impinged, the impact force to the vibration body 50 is large when the wristwatch 1 has fallen and landed under a posture in which a 9 o'clock - 3 o'clock direction extends along a vertical direction in comparison with a case where it lands on a floor or the like under a posture in which a 6 o'clock - 12 o'clock direction extends along the vertical direction and the impact is absorbed by the wristbands 21 having been provided in the 6 o'clock - 12 o'clock direction. Therefore, in the present embodiment, a maximum deflection quantity of the free end part FR is calculated by the external force acting on the vibration body 50 when the wristwatch 1 has been fallen from a height of several meters, and the wristwatch 1 has landed from a side face of the case 20 with the direction extending along the 9 o'clock - 3 o'clock direction being made the vertical direction.

Incidentally, there is not limited to the case where the wristwatch 1 lands from the case 20 side face like this, and there may be used the maximum deflection quantity when the wristwatch 1 has landed from its case 20 front side (cover glass side) or its back side (case back side).

In order to obtain the maximum deflection quantity of the vibration body 50, the load to the vibration body 50 has been made a point load not a line load by which the deflection is dispersed by a uniform distribution property of the load in the beam, and a position in which the load is applied has been set in an arm part 513 vicinity of the vibration part 511.

The piezoelectric actuator 31 in the present embodiment is driven by an application of an AC voltage of a single layer. When driving the piezoelectric actuator 31, the drive voltage is applied at a frequency 250 kHz for instance to the piezoelectric elements 52, 53 by a voltage application apparatus not shown in the drawing. By this, the piezoelectric elements 52, 53 expand and contract with the reinforcing plate 51 being made a common electrode, thereby exciting a longitudinal primary vibration which expands and contracts along its lengthwise direction. On this occasion, by a moment to the short hand direction of the vibration part 511 due to an unbalance between the protrusions 511A, 511B, the vibration part 511 induces a flex secondary vibration flexing along the short hand direction of the vibration part 511 point-symmetrically to the plane center (node position A), and the vibration part 511 vibrates by a mixed mode of the longitudinal vibration and the flex vibration. By this, the protrusion 511A of the vibration body 50 moves while depicting an approximately elliptic orbit R (Fig. 3). By a motion along this orbit R of the protrusion 511A, the rotor 32 is rotation-driven in a counterclockwise direction in Fig. 2.

Incidentally, by the fact that the protrusion 511B not butted against the rotor 32 functions as a balancer in a symmetrical position of the protrusion 511A, a movement locus of the protrusion 511A becomes the desired orbit R.

At the drive time of the piezoelectric actuator 31 like this, since the free end part FR of the vibration body 50 is movable in the ranges of the interstice SP1 and the interstice SP2, and these interstices SP1, SP2 are set on the basis of the amplitudes of the longitudinal vibration and the flex vibration, and the like, even if the protrusion part 144 is inserted through the hole 513B of the arm part 513, the vibration of the vibration part 511 is not impeded by the protrusion part 144, so that a decrease in drive efficiency does not occur. That is, by an existence of the interstice SP1, the longitudinal vibration, which displaces in a direction along a plate face of the vibration part 511, is not impeded. In addition, although the flex vibration is accompanied with a moment, the flex vibration is not impeded since the interstice SP2 is existent.

On the other hand, in such an impact time that the wristwatch 1 is fallen, although the vibration body 50 attempts to move and deform to an arbitrary direction having included the plane direction (XY direction) and the thickness direction Z of the wristwatch 1 by the external force of the impact, the protrusion part 144 is locked to the hole 513B of the arm part 513 after the vibration part 511 has moved within the interstices SP1, SP2 or has moved by the interstices SP1, SP2 by a magnitude of the impact force.

That is, with respect to the external force acting in the plane direction (XY direction) of the wristwatch 1, the movement of the vibration part 511 is captured by an existence of the interstice SP1 and, as to the external force acting in the thickness direction Z of the wristwatch 1, the movement of the vibration part 511 is captured by the existence of the interstice SP2.

Here, since the neck part 513A of the arm part 513 and the neck part 512A of the fixation part 512 are provided point-symmetrically in the plane center (node position A) of the vibration part 511, on the occasion of such an external impact as the falling time, it becomes possible to certainly capture the vibration part 511 from a side becoming exactly opposite to the fixation part 512 by a butting structure in the arm part 513. By this, the fact is prevented that a displacement twisting in a radial direction from the fixation part 512 is exerted on a vibration behavior with the vibration part 511 having been cantilever-supported by the fixation part 512 being shaken by the impact. That is, also at a disturbance time like this, the vibration of the vibration part 511 is normally maintained.

Therefore, it is possible to prevent the vibration part 511 from impinging against other component such as the rotor 32 while exceeding the interstices SP1, SP2, thereby being broken down, a feed quantity of the rotor 32 from fluctuating with the vibration part 511 being separated from the rotor 32, and a push engagement with the rotor 32 from becoming a state having been completely disengaged intact.

Further, as mentioned above, since the interstices SP1, SP2 are determined while considering a material strength of the stainless steel in the neck part 521A in the fixation part 512, it is also possible to prevent such a fact that, by the impact, the neck part 512A vicinity is snapped, or the copper foils 561A, 562A having been provided in the neck part 512A are cut.

That is, according to the present embodiment, the following advantages are brought about.

(1) In the piezoelectric actuator 31 driving the calendar mechanism 30 of the wristwatch 1, since the vibration body 50 has the arm part 513, and the interstices SP1, SP2 are formed between the arm part 513 and the protrusion part 144 when the vibration body 50 has been incorporated to the main plate 14, notwithstanding the fact that, at the drive time, the free end part FR exists in a free state by these interstices SP1, SP2, it is locked to the protrusion part 144 in the arm part 513 when the external impact has been exerted. By this, since the vibration part 511 is caught in both sides in which the fixation part 512 and the arm part 513 have been respectively provided, it is possible to prevent the vibration part 511 from moving while exceeding the dimensions of the interstices. Incidentally, since the interstice SP1 is formed in the XY direction and the interstice SP2 in the Z direction and, by the existences of the three-dimensional interstices like these, the arm part 513 becomes a butt when the external force capable of acting in the arbitrary direction has been exerted, that external force is buffered.

Accordingly, the rotor 32 can be driven without the vibration of the vibration part 511 being hindered, and it is possible to prevent such facts that the feed quantity of the rotor 32 by the vibration part 511 fluctuates due to the impact, and that the vibration part 511 impinges against the components such as the rotor 32 and the rotor support body 320, thereby being broken down.

(2) Here, from the fact that the arm part 513 is opposed to the protrusion part 144 while nipping the interstices SP1, SP2 and the vibration body 50 is certainly captured by the protrusion part 144 when moved and deformed at the impact time, and the fact that the vibration body 50 is captured in a free end part FR side in which the deflection quantity becomes large at the impact time, an effect of the impact resistance is large.

Accordingly, the impact resistance corresponding to the fall impact and the like can be greatly improved without incurring a decrease in the drive efficiency, so that it is possible to solve together problems relating to the drive efficiency and the impact resistance, which are usually difficult to be compatible.

Incidentally, in order to obtain these advantages, as mentioned above, since it is sufficient only if the interstices SP1, SP2 of the predetermined dimensions are set between the free end part FR and the protrusion part 144 on the basis of the maximum deflection quantity of the free end part FR, the internal stress in the neck part 512A, the material strength of the reinforcing plate 51, and the like, there is also no fact that the design becomes difficult.

(3) Additionally, since it is a structure in which the protrusion part 144 is inserted through the hole 513B having been formed in the arm part 513 of the vibration body 50 and the interstice SP1 is formed by a backlash between the protrusion part 144 and the hole 513B of the arm part 513, and the inner peripheral edge part of the hole 513B of the arm part 513 is locked to the protrusion part 144 at the impact time and, through this, a movement of the vibration part 511 from an inside to an outside of the hole 513B is certainly regulated, it is possible to improve the impact resistance.

(4) Since the protrusion part 144 inserted through the hole 513B of the arm part 513 is constituted by the large diameter part 144A and the small diameter part 144B, not only the interstice SP1 is formed between the inner peripheral edge of the hole 513B and a protrusion part 144 (small diameter part 144B) outer periphery but also the interstice SP2 is formed between the mutual opposed faces 144C, 513C of the large diameter part 144A and the arm part 513, so that it becomes possible to cause structures through these interstices SP1, SP2 to function respectively as the butts of the vibration body at the impact time. Further, the maintaining plate 54 is provided, and also the interstice SP2 having been formed between the stepped-down part 541 and the opposed face 513B to the arm part 513 realizes the butting structure of the vibration body 50, too.

Like this, by the structure through these interstices SP1, SP2, in which the interstices SP1, SP2 are formed respectively in the plane direction (XY direction) and the thickness direction Z of the wristwatch 1, since it is possible to capture the movement of the vibration body 50 due to the external force acting in the plane direction and the thickness direction of the wristwatch 1 and, additionally, in a slant direction intersecting with the plane direction and the thickness direction, it is possible to more improve the impact resistance.

(5) Further, since the fixation part 512 and the arm part 513 are provided in the vibration part 511 through the neck parts 512A, 513A of a constricted shape, and these neck parts 512A, 513A are provided in the node position A vicinity of the flex vibration in the vibration part 511, an influence to a vibration property of the vibration part 511 due to the fact that the fixation part 512 and the arm part 513 like these are provided can be made small as far as possible.

Further, since a vibration energy dissipating from the vibration part 511 through the arm part 513 and the fixation part

**EP 1 895 650 B1**

512 can be reduced, it is possible to improve the drive efficiency of the piezoelectric actuator 31.

(6) Like the above, at the impact time, since the vibration body 50 is captured by the protrusion part 144 and the protrusion of the vibration body 50 does not separate from the rotor 32, it is unnecessary to form, in the butted face 322 of the rotor 32, an indentation or the like for holding the protrusion 511A, so that the butted face 322 can be formed approximately like a plane having no irregularities. By this, it becomes possible to easily manufacture the rotor 32 by the press blanking and the like.

(7) And, as mentioned above, since the fact that the piezoelectric actuator 31 excellent in its impact resistance has been applied to the wristwatch 1 with the calendar mechanism 30 does not bring about, at the impact time, a fluctuation in the rotation quantity of the rotor 32, and can eliminate such a defect that a calendar display in the day display window 112, the month display part 113 or the like becomes imprecise, its advantage is extremely large.

(8) Other than this, as a meaning of the interstices SP1, SP2, there is enumerated the fact that, at the drive time of the piezoelectric actuator 31, a vibration noise is difficult to occur in the drive electrode 511D having been provided in the piezoelectric elements 52, 53 and, by this, it is possible to beforehand prevent such a defect that the drive control circuit 514 is destroyed by an electric shock. Further, since the vibration noise is difficult to occur also in the detection electrode 511C, notwithstanding the fact that, in the node position A vicinity, the detection electrode 511C is formed considerably small in comparison with the drive electrode 511D so as not to hinder the vibration of the vibration part 511, it is possible to precisely and certainly detect a vibration state of the vibration part 511. On the basis of this vibration detection, it is possible to stably drive the piezoelectric actuator 31 by the drive control circuit 514.

[Second embodiment]

Next, there is explained about a second embodiment of the present invention.
Incidentally, in the following explanation, as to a constitution similar to the embodiment having been already explained, the same reference numeral is applied, and the explanation is omitted.

The present embodiment is one in which, in the first embodiment, interstices of the predetermined dimensions have been set respectively among the main plate disposed while nipping the vibration body 50, the maintaining plate and a vibration body 50 front face.

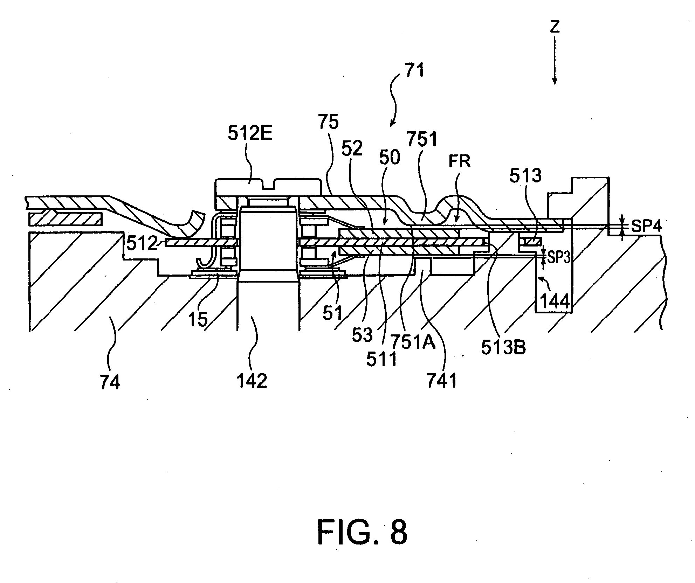

Fig. 8 is a side sectional view of a piezoelectric actuator 71, a main plate 74 as a base member, and a maintaining plate 75 in the present embodiment.

In the main plate 74, there is formed a pin part 741 as an opposed part, which protrudes toward the free end part FR of the vibration body 50 along the thickness direction Z (approximately the same as the lamination direction of the reinforcing plate 51 and the piezoelectric elements 52, 53) of the wristwatch 1.
Further, in the maintaining plate 75, there is formed, by a press forming or the like, a convex part 751 as an opposed part, which protrudes along a direction extending along the thickness direction Z of' -the wristwatch 1, and a protrusion tip face of the convex part 751 becomes an opposed face 751A facing on the vibration body 50.

If the vibration body 50 is incorporated to the main plate 74 and the maintaining plate 75 like these, the pin part 741 and the opposed face 751A are mutually opposed while nipping the free end part FR, and it follows that an interstice SP3 intervenes between the pin part 741 and a vibration part 511 back face, and an interstice SP4 intervenes between the opposed face 751A of the maintaining plate 75 and a vibration part 511 front face.

According to the present embodiment, in addition to the actions and the advantages, which have been mentioned in the first embodiment, there are brought about the following advantages.

(9) Since the pin part 741 and the convex part 751 are formed respectively in the main plate 74 and the maintaining plate 75, and the pin part 741 and the convex part 751 face on the free end part FR of the vibration body 50 in the thickness direction Z of the wristwatch 1 respectively through the interstices SP3, SP4, there are prevented, at the impact time, both of the movement of the free end part FR to a main plate 74 side and the movement to a maintaining plate 75 side, so that it is possible to more improve the impact resistance.

(10) Moreover, since the pin part 741 and the convex part 751 are provided so as to face on the free end part FR in which the deflection quantity becomes large at the impact time, it is possible to furthermore improve the impact resistance of the vibration body 50.

[Modified example of the present invention]

In the above, although there has been concretely explained about the best constitution for carrying out the present invention, the present invention is not limited to this. That is, although the present invention is especially illustrated and explained while relating mainly to the specified embodiments, it is one in which those skilled in the art can add various modifications and improvements to the embodiments having been mentioned above in a detailed constitution of shape, material, quantity and others without deviating from scopes of a technical thought and an object of the present invention.

Since the descriptions having defined the shape, the material and the like, which have been disclosed in the above, are ones having been illustratively described for facilitating an understanding of the present invention, and not ones defining the present invention, a description by a name of the member, in which there has been excluded the definition of one part or whole of the definitions of the shape, the material and the like, is one included in the present invention.

For example, in each of the above embodiments, although the interstices SP1, SP2 have intervened between the inner peripheral edge of the hole 513B of the arm part 513 and the protrusion part 144, it is not limited to the structure like this, and there may be a structure in which, e.g., there is formed, in the arm part, a concave part not the hole, and the interstice intervenes between an inner face of this concave part of the arm part and the attached part.

Additionally, the free end part may not have the arm part and, for example, a side face part of the free end part of the rectangular shape in plane may be disposed between it and the attached part through the interstice.

Further, the shape of the free end part is not limited to the rectangle, and there can be adopted various shapes such as rhombus, parallelogram, trapezoid, and torus shape.

Incidentally, in the vibration body, the free end part is not attachment-fixed to the attached member, i.e., can be deemed to be a portion other than the fixation part, and a position of the interstice between this free end part and the attached part may be an approximate center of the free end part not the end part or the side face of the free end part like each of the above embodiments.

Additionally, in the second embodiment, although the convex part 751 opposing to the free end part FR has been formed in the maintaining plate 54 which is a member separate from the main plate 14 to which the vibration body 50 has been attachment-fixed, it is not limited to this, and the opposed part facing on the free end part may be formed monolithically with the member in which the attached part has been formed. For example, a plate-like vibration body is inserted from a side face direction to a case inside like a U-letter in section, which includes the attached part, and, in this case, there may be formed monolithically the opposed part facing on the free end part of the vibration body.

Further, in each of the above embodiments, although the thickness direction Z of the wristwatch 1 and the lamination direction of the piezoelectric elements 52, 53 and the reinforcing plate 51 have been approximately the same, it is not limited to this, and the lamination direction of the piezoelectric elements and the reinforcing member may be a plane direction of the timepiece for instance.

Incidentally, one driven by the piezoelectric actuator is not limited to the rotor which is rotation-driven, and it may be a driven body which is driven so as to move linearly.

And, in each of the above embodiments, although the calendar mechanism of the wristwatch has been shown as an example in which the piezoelectric actuator has been applied, it is not limited to this, and the piezoelectric actuator of the present invention can be applied also as a drive means of the second hand or the like, whose feed quantity per unit time is larger than the calendar, and which is approximately, continuously driven. Here, a kind of the timepiece is not limited to the wristwatch, and the present invention is suitable also for a pocket watch or the like, which is carried.

Additionally, besides the timepiece, the piezoelectric actuator of the present invention can be suitably used in a zoom, an autofocus mechanism and a film winding-up mechanism of a camera and, in addition, also in a paper-feed mechanism of a printer and a mechanism for driving a toy such as vehicle and doll. In other words, the piezoelectric actuator of the present invention can be incorporated also to various electronic equipment such as camera, printer and toy, without being limited to the timepiece.

Further, additionally, the dimensions of the length and the width of the vibration part, the length and width dimensions of the fixation part and the arm part in the comparison with this vibration part, and the like, all of which have been shown in each of the above embodiments, are merely one examples, and the characteristic vibration frequency of the arm part or the like may be suitably determined in compliance with the characteristic vibration frequency and the drive frequency of the vibration part, or the like. That is, in the above first embodiment, although 10 kHz has been exemplified as the value separating the characteristic vibration frequency of the arm part from the characteristic vibration frequency of the vibration part, it is not limited to this, and it may be sufficient, e.g., if the characteristic vibration of the arm part is separated from the characteristic vibration frequency of the vibration part by a value corresponding to about 4% - about 7% of the characteristic vibration frequency of the longitudinal vibration of the vibration part.

Industrial Applicability

According to the present invention, merely by setting the interstices of the predetermined dimensions between the vibration body and the attached part, since the vibration body can be certainly captured at the impact time without impeding the vibration of the vibration body, the design does not become difficult and, further, it is possible to greatly improve the impact resistance without incurring the decrease in the drive efficiency.

**Claims**

1. A piezoelectric actuator (31) possessing a vibration body (50) having an piezoelectric element (52,53) in which an electrode has been provided, and vibrating by a voltage application to the electrode,:

   the vibration body (50) possesses the piezoelectric element (52,53) and a reinforcing member (51), which are mutually laminated,
   the reinforcing member (51) has a free end port (FR) in which the piezoelectric element (52,53) is disposed, the free end part (FR) having a protrusion (511A) which butts against a driven body (32), and a fixation part (512) fixed to an attached part (142) to which the piezoelectric actuator (31) is attached, and
   the free end part (FR) is disposed, under a state in which an impact is not exerted on the attached part (142) from an outside, through interstices (SP1,SP2,SP3,SP4) of predetermined dimensions respectively in a lamination direction (Z) of the piezoelectric element (52,53) and the reinforcing member (51) with respect to the attached part (142), and an in-face direction (xy) intersecting with the lamination direction (Z),

   **characterized in that:**

   the free end part (FR) has a vibration part (511) which is formed like a plate of approximately rectangle in plane, which vibrates in a mixed mode of a longitudinal vibration expanding and contracting along its lengthwise direction and a flex vibration flexing in a short hand direction intersecting with the lengthwise direction, and in which the fixation part (512) is provided in one of both side faces of the vibration part (511) along the lengthwise direction, and an arm part (513) which extends along a plane direction of the vibration part (511) from the other side face of the vibration part (511), and which is disposed in the attached part (142) through the interstices (SP1,SP2,SP3,SP4), and the arm part (513) is made a butt of the piezoelectric actuator (31).

2. A piezoelectric actuator according to claim 1, **characterized in that** a characteristic vibration frequency of the arm part (513) is separated by a predetermined value from a characteristic vibration frequency of the longitudinal vibration of the vibration part (511), and set so as not to interfere with the longitudinal vibration of the vibration part (511).

3. A piezoelectric actuator according to claim 2, **characterized in that:**

   as to a dimens ion of the arm part (513), a length dimension of the arm part (513) in a lengthwise direction of the vibration part (511) is shorter than a length dimension of the vibration part (511) in the lengthwise direction, and as to a dimension ratio concerned with a length of the arm part (513), a rate of the length dimension ($L_3$) of the arm part (513) to a width dimension ($W_3$) of the arm part (513) in a short hand direction of the vibration part (511) is smaller than a rate of the length dimension ($L_1$) of the vibration part (511) to the width dimension ($W_1$) in the short hand direction of the vibration part (511).

4. A piezoelectric actuator according to claim 2, **characterized in that** an area in which a length dimension ($L_3$) of the arm part (513) in a lengthwise direction ($L_1$) of the vibration part has been multiplied by a width dimension ($W_3$) of the arm part (513) in a short hand direction of the vibration part (511) is smaller than an area of the vibration part (511).

5. A piezoelectric actuator according to claim 1, **characterized in that:**

   in the arm part (513) there is formed a hole,
   the attached part (142) has a protrusion part protruding toward the hole and inserted through the hole, and
   the interstices (SP1,SP2,SP3,SP4) are formed between an inner peripheral edge of the hole of the arm part (513) and the protrusion part (144).

6. A piezoelectric actuator according to claim 5, **characterized in that:**

   the protrusion part (144) has, in its protrusion direction midway, a step part (144A,144B), and
   the interstice is formed also between mutual opposed faces of the step part (144A,144B) and the arm part (513).

7. A piezoelectric actuator according to claim 1, **characterized in that** the arm part (513) is provided near a position (A) of a node of the flex vibration of the vibration part (511).

8. A piezoelectric actuator according to claim 1, **characterized in that:**

the arm part (513) is provided in the vibration part (511) through an arm part side neck part (513A) of a constricted shape, which is linked to the vibration part (511), and

the arm part side neck part (513A) is provided near a position (A) of a node of the flex vibration of the vibration part (511).

**9.** A piezoelectric actuator according to claim 8,
**characterized in that:**

the fixation part (512) is provided in the vibration part (511) through a fixation part side neck part (512A) of a constricted shape, which is linked to the vibration part (511), and

the fixation part side neck part (512A) is provided near a position (A) of a node of the flex vibration of the vibration part (511), and in a position opposed to the arm part side neck part (513A) in a short hand direction of the vibration part (511).

**10.** A piezoelectric actuator according to claim 1, **characterized in that:**

the attached part (142) has an opposed part (741) facing on the free end part (FR) in a direction along a lamination direction of the vibration body (50), and

the interstice (SP1,SP2,SP3,SP4) is formed between the opposed part (741) and the vibration body (50).

**11.** A piezoelectric actuator according to claim 10, **characterized in that:**

the attached part (142) has a base member (14) to which the vibration body (50) is fixed, and a plate member (75) disposed so as to nip the vibration body (50) between it and the base member (14), and

the opposed parts (741,751) are provided respectively in mutually facing portions of the base member (14) and the plate member (75).

**12.** A piezoelectric actuator according to any of claims 1 to 11, **characterized in that**, in the driven body (32), a butted face against which the protrusion (514A) is butted is formed approximately like a plane.

**13.** An electronic equipment **characterized by** having a piezoelectric actuator (31) according to any of claims 1 to 12.

**14.** An electronic equipment **characterized in that** an electronic equipment according to claim 13 is a timepiece (1) having a clock means, and a clock information display part displaying an information having been clocked by the clock means.

**Patentansprüche**

**1.** Piezoelektrischer Aktuator (31), der einen Vibrationskörper (50) mit einem piezoelektrischen Element (52, 53) umfasst, in dem eine Elektrode vorgesehen wurde, und der durch eine Spannungsaufbringung an der Elektrode vibriert, wobei der Vibrationskörper (50) das piezoelektrische Element (52, 53) und ein Verstärkungsbauteil (51) umfasst, die gegenseitig geschichtet sind,

wobei das Verstärkungsbauteil (51) einen freien Endteil (FR) aufweist, in dem das piezoelektrische Element (52, 53) angeordnet ist, wobei der freie Endteil (FR) einen Vorsprung (511A) aufweist, der gegen einen angetriebenen Körper (32) anliegt, und einen Fixierteil (512), der an einem angebrachten Teil (142) fixiert ist, an dem der piezoelektrische Aktuator angebracht ist, und

der freie Endteil (FR) in einem Zustand angeordnet ist, in dem durch Fugen (SP1, SP2, SP3, SP4) vorbestimmter Dimensionen entsprechend in einer Schichtrichtung (Z) des piezoelektrischen Elements (52, 53) und dem Verstärkungsbauteil (51) bezüglich dem angebrachten Teil (142), und einer mit der Schichtrichtung (Z) kreuzenden Richtung in einer Fläche (x, y), keine Belastung von Außen am angebrachten Teil (142) ausgeübt wird,
**dadurch gekennzeichnet, dass**

der freie Endteil (FR) einen Vibrationsteil (511) aufweist, der wie eine ungefähr rechteckige Platte in einer Ebene ausgebildet ist, die in einer gemischten Schwingungsart einer sich entlang ihrer Längsrichtung expandierenden und kontrahierenden Längsvibration und einer in einer mit der Längsrichtung kreuzenden kurzen Richtung biegenden Biegevibration vibriert, und in welcher der Fixierteil (512) in einer von beiden Seitenflächen des Vibrationsteils (511) entlang der Längsrichtung vorgesehen ist, und einen Armteil (513), der sich entlang einer Ebenenrichtung des Vibrationsteils (511) von der anderen Seitenfläche des Vibrationsteils (511) erstreckt, und das im angebrachten Teil (142) durch die Fugen (SP1, SP2, SP3, SP4) angeordnet ist, und den Armteil (513) zu einem Anschlag des piezoelektrischen Aktuators (31) gemacht ist.

2. Piezoelektrischer Aktuator gemäß Anspruch 1, **dadurch gekennzeichnet, dass** eine charakteristische Vibrationsfrequenz des Armteils (513) durch einen vorbestimmten Wert einer charakteristischen Vibrationsfrequenz der Längsvibration des Vibrationsteils (511) getrennt wird, und so festgelegt wird, um nicht mit der Längsvibration des Vibrationsteils (511) zu interferieren.

3. Piezoelektrischer Aktuator gemäß Anspruch 2, **dadurch gekennzeichnet, dass:**

   eine Dimension des Armteils (513) betreffend, eine Längendimension des Armteils (513) in einer Längsrichtung des Vibrationsteils (511) kürzer ist als eine Längendimension des Vibrationsteils (511) in der Längsrichtung, und ein eine Länge des Armteils (513) angehendes Dimensionsverhältnis betreffend, ein Anteil der Längendimension ($L_3$) des Armteils (513) zu einer Breitenrichtung ($W_3$) des Armteils (513) in einer kurzen Richtung des Vibrationsteils (511) kleiner ist als ein Anteil der Längendimension ($L_1$) des Vibrationsteils (511) zur Breitendimension ($W_3$) in der kurzen Richtung des Vibrationsteils (511).

4. Piezoelektrischer Aktuator gemäß Anspruch 2, **dadurch gekennzeichnet, dass** ein Gebiet, bei dem eine Längendimension ($L_3$) des Armteils (513) in einer Längsrichtung ($L_1$) des Vibrationsteils mit einer Breitendimension ($W_3$) des Armteils (513) in einer kurzen Richtung des Vibrationsteils (511) multipliziert wurde, kleiner ist als ein Gebiet des Vibrationsteils (511).

5. Piezoelektrischer Aktuator gemäß Anspruch 1, **dadurch gekennzeichnet, dass:**

   im Armteil (513) ein Loch ausgebildet ist,
   das angebrachte Teil (142) einen Vorsprung-Teil aufweist, der in Richtung des Lochs hervorspringt, und durch das Loch eingeführt ist, und
   die Fugen (SP1, SP2, SP3, SP4) zwischen einer Innenumfangskante des Lochs des Armteils (513) und des Vorsprung-Teils (144) ausgebildet sind.

6. Piezoelektrischer Aktuator gemäß Anspruch 5, **dadurch gekennzeichnet, dass:**

   der Vorsprung-Teil (144) in seiner Vorstehrichtung in der Mitte einen Stufenteil (144A, 144B) aufweist, und
   die Fuge ebenso zwischen den gegenseitig gegenüberliegenden Flächen des Stufenteils (144A, 144B) und des Armteils (513) ausgebildet ist.

7. Piezoelektrischer Aktuator gemäß Anspruch 1, **dadurch gekennzeichnet, dass** der Armteil (513) nahe einer Position (A) eines Knotens der Biegevibration des Vibrationsteils (511) vorgesehen ist.

8. Piezoelektrischer Aktuator gemäß Anspruch 1, **dadurch gekennzeichnet, dass:**

   der Armteil (513) im Vibrationsteil (511) durch einen Armteilseitenstutzenteil (513A) von verengter Gestalt vorgesehen ist, der mit dem Vibrationsteil (511) verknüpft ist, und
   der Armteilseitenstutzenteil (513A) nahe einer Position (A) eines Knotens einer Biegevibration des Vibrationsteils (511) vorgesehen ist.

9. Piezoelektrischer Aktuator gemäß Anspruch 8, **dadurch gekennzeichnet, dass:**

   der Fixierteil (512) im Vibrationsteil durch einen Fixierteilseitenstutzenteil (512A) von verengter Gestalt vorgesehen ist, der mit dem Vibrationsteil (511) verknüpft ist, und
   der Fixierteilseitenstutzenteil (512A) nahe einer Position (A) eines Knotens der Biegevibration des Vibrationsteils (511) vorgesehen ist, und in einer Position, die dem Armteilseitenstutzenteil (513A) in einer kurzen Richtung des Vibrationsteils (511) gegenüberliegt.

10. Piezoelektrischer Aktuator gemäß Anspruch 1**, dadurch gekennzeichnet, dass:**

   der angebrachte Teil (142) einen gegenüberliegenden Teil (741) aufweist, der zum freien Endteil (FR) in einer Richtung entlang einer Schichtrichtung des Vibrationskörpers (50) weist, und

die Fuge (SP1, SP2, SP3, SP4) zwischen dem gegenüberliegenden Teil (741) und dem Vibrationskörper (50) ausgebildet ist.

11. Piezoelektrischer Aktuator gemäß Anspruch 10, **dadurch gekennzeichnet, dass:**

der angebrachte Teil (142) ein Basisbauteil (14) aufweist, an das der Vibrationskörper (50) fixiert ist, und ein so angeordnetes Plattenbauteil (75), um den Vibrationskörper (50) zwischen ihm und dem Basiselement (14) zu fassen, und
die gegenüberliegenden Teile (741, 751) entsprechend in gegenseitig zueinander weisenden Abschnitten des Basiselements (14) und des Plattenelements (75) vorgesehen sind.

12. Piezoelektrischer Aktuator gemäß einem der Ansprüche 1 bis 11, **dadurch gekennzeichnet, dass** im angetriebenen Körper (32) eine Anschlagsfläche, gegen welche der Vorsprung (514A) anschlägt, ungefähr wie eine Ebene ausgebildet ist.

13. Elektrische Ausrüstung, **dadurch gekennzeichnet, dass** sie einen piezoelektrischen Aktuator (31) gemäß einem der Ansprüche 1 bis 12 aufweist.

14. Elektrische Ausrüstung, **dadurch gekennzeichnet, dass** eine elektrische Ausrüstung gemäß Anspruch 13 eine Uhr

(1) ist, die ein Uhrmittel und ein Uhrinformationsanzeigeteil aufweist, das eine durch das Uhrmittel registrierte Information anzeigt.

## Revendications

1. Actionneur piézoélectrique (31) possédant un corps de vibration (50) ayant un élément piézoélectrique (52, 53) dans lequel une électrode a été prévue, et vibrant par l'application d'une tension à l'électrode :

le corps de vibration (50) possède l'élément piézoélectrique (52, 53) ainsi qu'un élément de renforcement (51), qui sont mutuellement posés en strates,
l'élément de renforcement (51) a une partie à extrémité libre (FR) dans laquelle l'élément piézoélectrique (52, 53) est disposé, la partie à extrémité libre (FR) ayant une protubérance (511A) qui est en butée contre un corps entraîné (32), et une partie de fixation (512) fixée à une partie fixée (142) à laquelle l'actionneur piézoélectrique (31) est fixé, et
la partie à extrémité libre (FR) est disposée, dans un état dans lequel une pression n'est pas exercée sur la partie fixée (142) depuis l'extérieur, par des interstices (SP1, SP2, SP3, SP4) de dimensions prédéterminées respectivement dans une direction de stratification (z) de l'élément piézoélectrique (52, 53) et de l'élément de renforcement (51) par rapport à la partie fixée (142), et une direction en face (x y) croisant la direction de stratification (z)
**caractérisé en ce que**
la partie à extrémité libre (FR) possède une partie de vibration (511) qui est formée comme une plaque approximativement rectangle en plan, qui vibre dans un mode mixte d'une vibration longitudinale se dilatant et se contractant le long de sa direction de longueur et une vibration par flexion fléchissant dans une direction de la petite aiguille croisant la direction de longueur, et dans laquelle la partie de fixation (512) est prévue dans l'une des deux faces latérales de la partie de vibration (511) le long de la direction de longueur, et une partie de bras (513) qui s'étend le long de la direction de plan de la partie de vibration (511) depuis l'autre face latérale de la partie de vibration (511), et qui est disposé dans la partie fixée (142) à travers les interstices (SP1, SP2, SP3, SP4), et la partie de bras (513) est faite comme un pied de l'actionneur piézoélectrique (31).

2. Actionneur piézoélectrique selon la revendication 1, **caractérisé en ce qu'**une fréquence de vibration caractéristique de la partie de bras (513) est séparée par une valeur prédéterminée de la fréquence de vibration caractéristique de la vibration longitudinale de la partie de vibration (511), et est établie de manière à ne pas perturber la vibration longitudinale de la partie de vibration (511).

3. Actionneur piézoélectrique selon la revendication 2, **caractérisé en ce que**
concernant la dimension de la partie de bras (513), une dimension de longueur de la partie de bras (513) dans une direction de longueur de la partie de vibration (511) est plus courte qu'une dimension de longueur de la partie de vibration (511) dans la direction de longueur, et

concernant un rapport de dimensions pour ce qui est de la longueur de la partie de bras (513), un taux de la dimension de longueur (L3) de la partie de bras (513) sur une dimension de largeur (W3) de la partie de bras (513) dans une direction de la petite aiguille de la partie de vibration (511) est plus petit qu'un taux de la dimension de longueur (L1) de la partie de vibration (511) sur la dimension de largeur (W1) dans la direction de la petite aiguille de la partie de vibration (511).

4. Actionneur piézoélectrique selon la revendication 2, **caractérisé en ce qu'**une superficie dans laquelle une dimension de longueur (L3) de la partie de bras (513) dans une direction de longueur (L1) de la partie de vibration a été multipliée par une dimension de largeur (w3) de la partie de bras (513) dans une direction de la petite aiguille de la partie de vibration (511) est plus petite qu'une superficie de la partie de vibration (511).

5. Actionneur piézoélectrique selon la revendication 1, **caractérisé en ce que**
dans la partie de bras (513), un trou est formé,
la partie fixée (142) dispose d'une partie en protubérance faisant saillie vers le trou et insérée à travers le trou, et
les interstices (SP1, SP2, SP3, SP4) sont formés entre un bord périphérique interne du trou de la partie de bras (513) et la partie en protubérance (144).

6. Actionneur piézoélectrique selon la revendication 5, **caractérisé en ce que :**

la partie en protubérance (144) dispose, dans direction de protubérance médiane, une partie étagée (144A, 144B), et
l'interstice est formé également entre des faces opposées entre elles de la partie étagée (144A, 144B) et de la partie de bras (513).

7. Actionneur piézoélectrique selon la revendication 1, **caractérisé en ce que** la partie de bras (513) est fournie près d'une position (A) d'un noeud de la vibration par flexion de la partie de vibration (511).

8. Actionneur piézoélectrique selon la revendication 1, **caractérisé en ce que :**

la partie de bras (513) est fournie dans la partie de vibration (511) à travers une partie de collet (513A) côté partie de bras avec une forme contrainte, qui est reliée à la partie de vibration (511),
et
la partie de collet (513A) côté partie de bras est fournie près d'une position (A) d'un noeud de la vibration par flexion de la partie de vibration (511).

9. Actionneur piézoélectrique selon la revendication 8,
**caractérisé en ce que**
la partie de fixation (512) est fournie dans la partie de vibration (511) à travers une partie de collet (512A) côté partie de fixation avec une forme contrainte, qui est reliée à la partie de vibration (511), et
la partie de collet (512A) côté partie de fixation est fournie près d'une position (A) d'un noeud de la vibration par flexion de la partie de vibration (511), et dans une position opposée à la partie de collet (513A) côté partie de bras dans une direction de la petite aiguille de la partie de vibration (511).

10. Actionneur piézoélectrique selon la revendication 1, **caractérisé en ce que :**

la partie fixée (142) dispose d'une partie opposée (741) faisant face sur la partie à extrémité libre (FR) dans une direction le long d'une direction de stratification du corps de vibration (50), et
l'interstice (SP1, SP2, SP3, SP4) est formé entre la partie opposée (741) et le corps de vibration (50).

11. Actionneur piézoélectrique selon la revendication 10, **caractérisé en ce que**
la partie fixée (142) dispose d'un élément de base (14) auquel le corps de vibration (50) est fixé, et un élément de plaque (75) disposé de manière à pincer le corps de vibration (50) entre lui et l'élément de base (14), et
les parties opposées (741, 751) sont fournies respectivement dans des parties se regardant de l'élément de base (14) et l'élément de plaque (75).

12. Actionneur piézoélectrique selon l'une des revendications 1 à 11, **caractérisé en ce que,** dans le corps entraîné (32), une face en butée contre laquelle la protubérance (514A) est en butée est formée approximativement comme un plan.

**13.** Equipement électronique **caractérisé par** le fait de comprendre un actionneur piézoélectrique (31) selon l'une des revendications 1 à 12.

**14.** Equipement électronique **caractérisé en ce qu'**un équipement électronique selon la revendication 13 est une pièce d'horlogerie (1) ayant un moyen d'horloge, et une partie d'affichage d'informations d'horloge affichant des informations ayant été minutées par le moyen d'horloge.

FIG. 1

FIG. 2

EP 1 895 650 B1

FIG. 3

25

EP 1 895 650 B1

320    54    51  52    50    511B

322    511A

32    14    53

# FIG. 4

FIG. 5

50

W₁

511C
511E

W₂

W₃

L₁

L₃

W

W

A

513

5130
511D

I

I

52

L₂

512    511

# FIG. 6

FIG. 7A

FIG. 7B

EP 1 895 650 B1

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004301627 A
- US 20050082950 A1
- US 20040227433 A1